# FASCICULE DE BREVET EUROPEEN

(11) **EP 1 298 019 B1**
(45) Date de publication et mention de la délivrance du brevet: **14.06.2006**
(21) Numéro de dépôt: 02292360.1
(22) Date de dépôt: 25.09.2002
(51) Int. Cl.: B60S 1/04

(54) **Dispositif de fixation d'un mécanisme d'entraînement d'essuie-glace d'un véhicule automobile**
Scheibenwischer-Antriebsmechanismus-Befestigungsanlage
Mounting device for a vehicle windscreen wiper driving mechanism

(30) Priorité: 28.09.2001 FR 0112538
(43) Date de publication de la demande: 02.04.2003
(73) Titulaire: Peugeot Citroen Automobiles SA, 92200 Neuilly sur Seine (FR)
(72) Inventeur: Besson, Jack, 78200 Mantes la Jolie (FR)
(74) Mandataire: Thinat, Michel

(56) Documents cités:
- EP-A- 0 532 384
- US-A- 4 435 875
- PATENT ABSTRACTS OF JAPAN vol. 1999, no. 09, 30 juillet 1999 (1999-07-30) & JP 11 099910 A (ISEKI &CO LTD), 13 avril 1999 (1999-04-13)
- PATENT ABSTRACTS OF JAPAN vol. 1999, no. 03, 31 mars 1999 (1999-03-31) & JP 10 329658 A (NISSAN MOTOR CO LTD), 15 décembre 1998 (1998-12-15)

## Description

La présente invention concerne un dispositif de fixation d'un mécanisme d'entraînement d'essuie-glace pour un véhicule automobile.

On connaît un tel dispositif selon lequel le mécanisme d'entraînement d'essuie-glace comprend un boîtier pourvu d'un tube cylindrique traversant un perçage d'une glace, telle qu'un pare-brise de véhicule, et traversé par un axe de sortie rotatif auquel est fixé un bras d'essuie-glace permettant l'essuyage d'une surface de la glace.

Ce dispositif de fixation connu comprend une plaque de support du mécanisme d'entraînement comportant un perçage de passage du tube cylindrique de ce mécanisme et qui est fixée d'une part par collage à la surface de la glace opposée à la surface à essuyer et d'autre part au boîtier de ce mécanisme par au moins un élément de liaison, tel qu'un goujon.

Ce dispositif antérieur a pour inconvénients d'occasionner la propagation de vibrations du mécanisme d'entraînement sur la glace et de ne pas assurer une bonne étanchéité à l'emplacement de passage du tube cylindrique de support de l'axe de sortie au travers de la glace.

La présente invention a pour but d'éliminer les inconvénients ci-dessus en proposant un dispositif de fixation d'un mécanisme d'entraînement d'essuie-glace qui comprend un boîtier pourvu d'un tube cylindrique traversant un perçage d'une glace et traversé par un axe de sortie rotatif d'entraînement d'un bras d'essuie-glace permettant l'essuyage d'une surface de la glace, lequel dispositif comprend une plaque de support du mécanisme d'entraînement comportant un perçage de passage du tube cylindrique et fixée d'une part par collage à la surface de la glace opposée à la surface à essuyer et d'autre part au boîtier de ce mécanisme par au moins un élément de liaison (Dispositif du type révélé, par exemple, dans EP-A-0 532 384), et qui est caractérisé en ce qu'il comprend également une pièce en caoutchouc en forme d'étriér fixée à la glace de façon qu'une première des deux branches de la pièce recouvre directement la zone de surface de glace à essuyer située au voisinage du perçage de la glace et la seconde branche de la pièce soit prise en sandwich entre la plaque de support et une semelle du boîtier du mécanisme d'entraînement, le tube cylindrique traversant deux orifices respectivement des première et seconde branches de la pièce en caoutchouc enserrant le tube, pour ainsi amortir les vibrations propagées par le mécanisme d'entraînement à la glace et assurer une étanchéité entre le mécanisme d'entraînement et le perçage de la glace.

Le dispositif comprend en outre une pièce en caoutchouc formant bague cylindrique d'étanchéité logée dans le perçage de la glace en enserrant le tube cylindrique.

Selon un premier mode de réalisation, la bague d'étanchéité comprend une collerette interposée entre la semelle du boîtier du mécanisme d'entraînement et la seconde branche de la pièce en caoutchouc et une autre collerette opposée élastiquement en appui sur la première branche de la pièce en caoutchouc pour plaquer cette dernière sur la surface à essuyer de la glace.

Selon un second mode de réalisation, la bague d'étanchéité est réalisée par moulage avec la seconde branche de la pièce en caoutchouc en s'étendant perpendiculairement de cette branche et la première branche de la pièce en caoutchouc est en appui étanche sur l'extrémité libre de la bague d'étanchéité.

Avantageusement, la branche de liaison des deux branches de la pièce en caoutchouc est en appui sur un bord inférieur de la glace.

Chaque élément de liaison comprend un goujon solidaire de la plaque de support en traversant successivement un perçage de la seconde branche de la pièce en caoutchouc et un perçage de la semelle de fixation du boîtier du mécanisme d'entraînement, et un écrou de serrage.

La glace est fixée par deux bandes parallèles de colle respectivement à deux plaques parallèles frontales d'une structure de support en forme de boîtier et entre lesquelles est fixé l'ensemble constitué par la pièce en caoutchouc, la plaque de support et la semelle du boîtier du mécanisme d'entraînement qui est logé dans la structure de support comportant une ou plusieurs trappes d'accès, de l'extérieur, au mécanisme d'entraînement.

L'une des bandes de colle est appliquée suivant le bord inférieur de la glace et la pièce en caoutchouc en étrier est située entre deux portions séparées de colle de cette bande.

L'invention vise également un véhicule automobile, caractérisé en ce que le pare-brise avant de celui-ci est équipé d'au moins un dispositif de fixation d'un mécanisme d'entraînement d'essuie-glace tel que défini précédemment.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant deux modes de réalisation de l'invention et dans lesquels :
- la figure 1 représente en vue de face un pare-brise pour véhicule automobile auquel s'applique le dispositif de fixation conforme à l'invention ;
- la figure 2 est une vue en coupe agrandie suivant la flèche II-II de la figure 1 et représentant le dispositif de fixation de l'invention suivant un premier mode de réalisation ;
- la figure 3 est une vue en coupe semblable à celle de la figure 2 et représentant un second mode de réalisation du dispositif de fixation de l'invention ;
- la figure 4 représente la fixation du pare-brise du véhicule à une structure de support ; et
- les figures 5A à 5E sont des vues de face de différents pare-brise à chacun desquels peut s'appliquer le dispositif de fixation de l'invention.

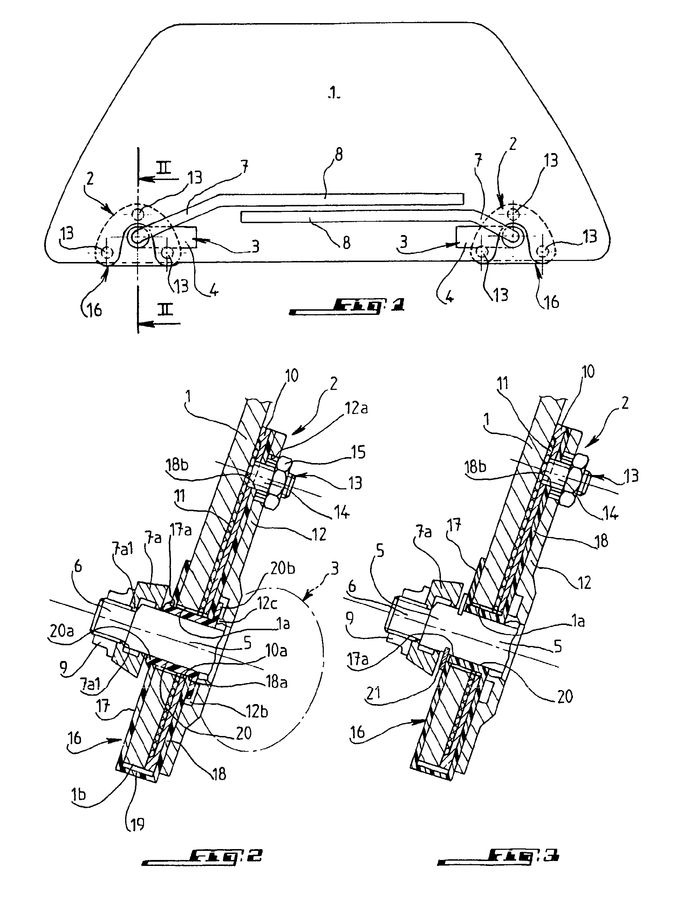

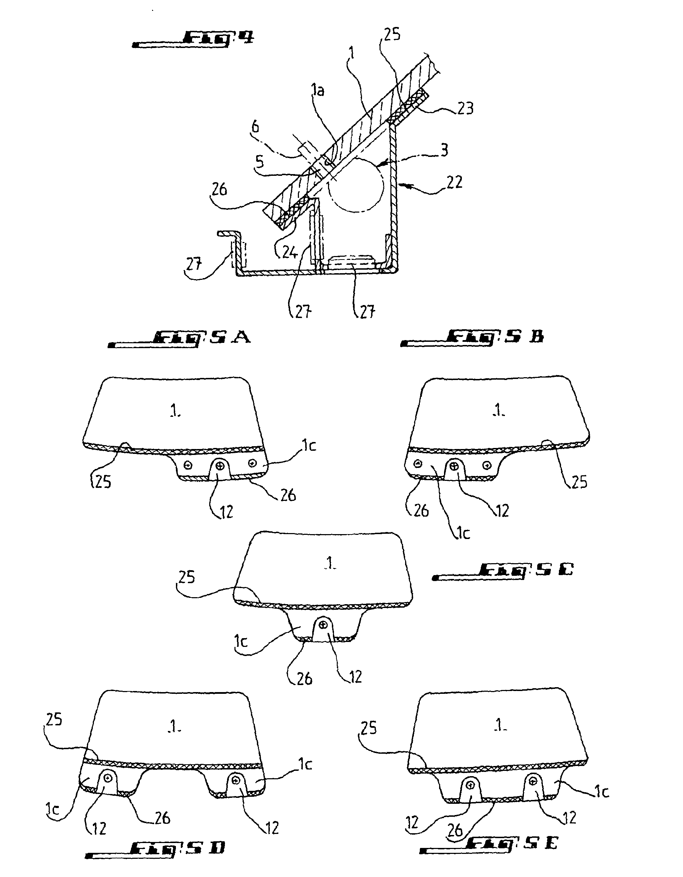

En se reportant tout d'abord aux figure 1 et 2, la référence 1 désigne un pare-brise avant pour véhicule automobile en partie inférieure duquel sont fixés deux dispositifs 2 pour la fixation respectivement de deux mécanismes d'entraînement d'essuie-glace 3 de la surface à nettoyer du pare-brise 1.

Chaque mécanisme d'entraînement 3 peut être constitué par un réducteur relié à un moteur électrique (non représenté) solidaire du boîtier 4 de ce mécanisme.

Chaque mécanisme d'entraînement est pourvu d'un tube cylindrique 5 qui est traversé par un axe de sortie 6 entraîné en rotation par le mécanisme 3 de façon alternée et sur une course angulaire limitée.

Un bras d'essuie-glace 7 portant un balai d'essuie-glace 8 permettant d'essuyer la surface externe du pare-brise est solidaire en rotation de l'axe de sortie 6 par l'intermédiaire d'un écrou 9 vissé sur l'extrémité filetée de l'axe 6 pour maintenir axialement relativement au tube cylindrique 5 la partie 7a du bras d'essuie-glace 7 solidaire en rotation de l'axe 6 par tout moyen approprié tel qu'au moins deux tenons 7a1 engagés respectivement dans deux rainures (non représentées) diamétralement opposées de l'axe de sortie 6.

Comme cela ressort mieux de la figure 2, le tube cylindrique 5 traverse un perçage 1a réalisé à travers le pare-brise 1 en partie inférieure de celui-ci.

Le dispositif de fixation du mécanisme d'entraînement 3 au pare-brise 1 comprend une plaque de support 10 fixée d'une part par un moyen adhésif 11 à la surface du pare-brise 1 opposée à la surface extérieure à nettoyer de celui-ci et d'autre part à une semelle 12 solidaire du boîtier 4 du mécanisme d'entraînement 3. La semelle 12 est fixée sur la plaque de support 10 par l'intermédiaire d'un ou plusieurs éléments de liaison 13, de préférence au nombre de trois, chacun constitué par un goujon 14 solidaire de la plaque de support 10 perpendiculairement à celle-ci en traversant un perçage correspondant 12a de la semelle 12 et un écrou de serrage 15 bloquant la semelle 12 sur la plaque de support 10.

Le moyen adhésif 11 peut être constitué par un film mince de colle du genre époxy à appliquer sur pratiquement toute la surface de la plaque de support 10 devant contacter la surface correspondante du pare-brise 1.

La plaque de support 10 comprend un perçage 10a pour le passage du tube cylindrique de support de l'axe de sortie 6.

Les deux mécanismes d'entraînement 3 des bras d'essuie-glace 7 sont disposés à chacune des extrémités du pare-brise 1 de façon à déplacer les balais d'essuie-glace 8 suivant des mouvements de balayage antagonistes.

Selon l'invention, chaque dispositif de fixation 2 comprend en outre une pièce en caoutchouc 16 montée relativement au pare-brise 1 de façon à amortir les vibrations propagées notamment par le mécanisme d'entraînement, lors de son fonctionnement, au pare-brise 1 et à assurer une étanchéité entre ce mécanisme et l'extérieur du pare-brise 1.

Pour cela, la pièce en caoutchouc 16 présente une forme en étrier dont l'une 17 des deux branches recouvre directement la zone de surface extérieure du pare-brise 1 située au voisinage du perçage 1a du pare-brise 1 et l'autre branche 18 soit prise en sandwich entre la plaque de support 10 et la semelle 12 du boîtier du mécanisme d'entraînement 3, la branche 19 de raccordement des deux branches parallèles 17, 18 de la pièce en caoutchouc 16 étant en appui sur le bord inférieur 1b du pare-brise 1 ou légèrement séparée de celui-ci comme représenté en figure 2.

Les deux branches 17, 18 de la pièce en caoutchouc 16 comportent respectivement deux perçages 17a, 18a traversés par le tube cylindrique 5 et pouvant avoir un diamètre tel que chaque branche 17, 18 enserre le tube cylindrique 5.

De préférence, le dispositif comprend également une autre pièce en caoutchouc formant bague cylindrique 20 traversant le perçage 1a du pare-brise et montée concentriquement sur le tube cylindrique 5 en enserrant celui-ci. La bague cylindrique 20 comprend une collerette extrême 20a élastiquement en appui sur la branche externe 17 de la pièce en caoutchouc 16 pour plaquer la branche 17 sur la zone de surface correspondante de la surface extérieure du pare-brise 1. La bague cylindrique 20 comprend une autre collerette 20b interposée entre la branche 18 de la pièce en caoutchouc 16 et la semelle 12 en étant logée dans un lamage 12b de cette semelle. La collerette 20b est maintenue en appui sur la branche 18 par un épaulement annulaire 12c de la semelle 12.

La bague cylindrique 20 ainsi montée assure une étanchéité parfaite entre le mécanisme d'entraînement 3 et l'extérieur du pare-brise 1 tout en amortissant davantage les vibrations propagées par ce mécanisme au pare-brise 1.

Bien entendu, la branche 18 de la pièce en caoutchouc 16 comporte un ou plusieurs perçages 18b pour le passage d'un ou de plusieurs goujons de fixation 13. La figure 2 montre que la branche 18 de la pièce 16 a une longueur supérieure à la branche 17 recouvrant la surface externe du pare-brise 1 du fait de la présence du ou des goujons de fixation 13 relativement distant du tube cylindrique 5.

Le mode de réalisation du dispositif représenté en figure 3 diffère de celui de la figure 2 en ce que la bague d'étanchéité 20 est intégralement moulée avec la branche 18 de la pièce en caoutchouc 16 en s'étendant perpendiculairement de cette branche et que l'autre branche 17 de la pièce 16 est rabattue sur la zone correspondante de la surface externe du pare-brise 1 en venant en appui sur l'extrémité libre de la bague 20 opposée à la branche 18. Le perçage 17a de la branche 17 peut avoir un diamètre tel que la branche 17 enserre le tube cylindrique 5 et la branche 17 peut être maintenue en appui sur la zone de surface correspondante à nettoyer du pare-brise 1 par un anneau de retenue 21, tel qu'un circlips, solidaire du tube cylindrique 5. Autrement, les autres pièces ou éléments de la figure 3 sont identiques aux pièces ou éléments déjà décrits en référence au mode de réalisation de la figure 2 et portent les mêmes références.

La figure 4 représente la fixation du pare-brise 1 à une structure de support 22 solidaire du châssis du véhicule.

Cette figure montre que le pare-brise 1 est fixé à deux plaques frontales parallèles espacées de support 23, 24 de la structure 22 en forme de boîtier, par l'intermédiaire de deux bandes ou lignes d'adhésif respectivement supérieure 25 et inférieure 26. Chaque moyen adhésif peut être constitué par de la colle du genre époxy. Les deux bandes de colle 25, 26 s'étendent parallèlement l'une à l'autre et, comme représenté aux différents types de pare-brise des figures 5A à 5E, la bande supérieure de colle 25 s'étend sur la largeur du pare-brise 1, c'est-à-dire transversalement à l'axe longitudinal du véhicule en position montée de ce pare-brise, tandis que la bande de colle inférieure 26 s'étend sur une largeur d'au moins une partie d'extension inférieure 1c du pare-brise 1 suivant le type de celui-ci. La bande de colle 26 est étalée suivant le bord inférieur de la partie d'extension 1c du pare-brise. En outre, suivant le type de pare-brise 1, chaque semelle 12 de support du mécanisme d'entraînement 3 est fixée à la partie d'extension 1c du pare-brise en s'étendant transversalement à partir du bord inférieur de cette partie d'extension vers la bande de colle supérieure 25. Autrement dit, chaque semelle 12 s'étend entre les deux bandes de colle 25 et 26 et entre deux parties séparées de la bande de colle 26.

La figure 4 montre ainsi que chaque mécanisme d'entraînement 3 fait saillie dans le boîtier de la structure de support 22 qui comprend une ou plusieurs trappes 27 réalisées respectivement dans des parois respectives de la structure 22 pour permettre à une personne d'accéder, de l'extérieur, au mécanisme d'entraînement 3 en vue de le démonter et effectuer une réparation de celui-ci en cas de défaillance.

Les deux pare-brise représentés respectivement aux figures 5A et 5B sont du type où le mécanisme d'entraînement est solidaire de la semelle 12 pour entraîner en synchronisme, par l'intermédiaire d'un embiellage, deux bras d'essuie-glace pour conduite de direction du véhicule à gauche ou à droite. Le pare-brise de la figure 5C est du type selon lequel le mécanisme d'entraînement solidaire de la semelle 12 entraîne directement un seul balai d'essuie-glace. Le pare-brise de la figure 5D est du type selon lequel deux mécanismes d'entraînement sont fixés aux parties d'extension 1c de celui-ci respectivement par les deux semelles 12 pour un balayage synchronisé de deux bras d'essuie-glace. Enfin, le pare-brise de la figure 5E est celui qui a été décrit en référence à la figure 1 pour permettre d'entraîner par deux mécanismes d'entraînement respectivement deux bras d'essuie-glace antagonistes.

Le dispositif ci-dessus décrit de l'invention du fait qu'il élimine les phénomènes de broutement des balais d'essuie-glace sur le pare-brise du véhicule, améliore l'action de ceux-ci pour éliminer l'accumulation d'eau et les impuretés sur le pare-brise. Les pièces d'étanchéité en caoutchouc sont précisément positionnées relativement au pare-brise par le centrage réalisé par le tube cylindrique au travers du pare-brise.

## Revendications

1. Dispositif de fixation d'un mécanisme d'entraînement d'essuie-glace (3) qui comprend un boîtier (4) pourvu d'un tube cylindrique (5) traversant un perçage (1a) d'une glace (1) et traversé par un axe de sortie rotatif (6) d'entraînement d'un bras d'essuie-glace (7) permettant l'essuyage d'une surface de la glace, lequel dispositif comprend une plaque (10) de support du mécanisme d'entraînement (3) comportant un perçage (10a) de passage du tube cylindrique (5) et fixée d'une part par collage à la surface de la glace (1) opposée à la surface à essuyer et d'autre part au boîtier (4) de ce mécanisme par au moins un élément de liaison (13), **caractérisé en ce qu'**il comprend également une pièce en caoutchouc (16) en forme d'étrier fixée à la glace (1) de façon qu'une première (17) des deux branches (17,18) de la pièce (16) recouvre directement la zone de surface de glace à essuyer située au voisinage du perçage (1a) de la glace (1) et la seconde branche (18) de la pièce (16) soit prise en sandwich entre la plaque de support (10) et une semelle (12) du boîtier (4) du mécanisme d'entraînement (3), le tube cylindrique (5) traversant deux orifices (17a, 18a) respectivement des première et seconde branches (17, 18) de la pièce en caoutchouc (16) enserrant le tube (5), pour ainsi amortir les vibrations propagées par le mécanisme d'entraînement (3) à la glace (1) et assurer une étanchéité entre le mécanisme d'entraînement (3) et le perçage (1a) de la glace.

2. Dispositif selon la revendication 1, **caractérisé en ce qu'**il comprend en outre une pièce en caoutchouc (20) formant bague cylindrique d'étanchéité logée dans le perçage (1a) de la glace (1) en enserrant le tube cylindrique (5).

3. Dispositif selon la revendication 2, **caractérisé en ce que** la bague d'étanchéité (20) comprend une collerette (20b) interposée entre la semelle (12) du boîtier (4) du mécanisme d'entraînement (3) et la seconde branche (18) de la pièce en caoutchouc (16) et une autre collerette (20a) opposée élastiquement en appui sur la première branche (17) de la pièce en caoutchouc (16) pour plaquer la première branche (17) sur la surface à essuyer de la glace (1).

4. Dispositif selon la revendication 2, **caractérisé en ce que** la bague d'étanchéité (20) est réalisée par moulage avec la seconde branche (18) de la pièce en caoutchouc (16) en s'étendant perpendiculairement de cette branche et la première branche (17) de la pièce en caoutchouc (16) est en appui étanche sur l'extrémité libre de la bague d'étanchéité (20).

5. Dispositif selon l'une des revendications précédentes, **caractérisé en ce que** la branche (19) de liaison des deux branches (17, 18) de la pièce en caoutchouc (16) est en appui sur un bord inférieur de la glace (1).

6. Dispositif selon l'une des revendications précédentes, **caractérisé en ce que** l'élément de liaison (13) comprend un goujon (14) solidaire de la plaque de support (10) en traversant successivement un perçage (18b) de la seconde branche (18) de la pièce en caoutchouc (16) et un perçage (12a) de la semelle (12) de fixation du boîtier (4) du mécanisme d'entraînement (3), et un écrou de serrage (15).

7. Dispositif selon l'une des revendications précédentes, **caractérisé en ce que** la glace (1) est fixée par deux bandes parallèles de colle (25, 26) respectivement à deux plaques parallèles frontales (23, 24) d'une structure de support en forme de boîtier (22) et entre lesquelles est fixé l'ensemble constitué par la pièce en caoutchouc (16), la plaque de support (10) et la semelle (12) du boîtier (4) du mécanisme d'entraînement (3) qui est logé dans la structure de support (22) comportant une ou plusieurs trappes d'accès (27), de l'extérieur, au mécanisme d'entraînement (3).

8. Dispositif selon la revendication 7 lorsque considérée en combinaison avec la revendication 5, **caractérisé en ce que** l'une (26) des bandes de colle est appliquée suivant le bord inférieur de la glace (1) et la pièce en caoutchouc en étrier (16) est située entre deux portions séparées de colle de cette bande.

9. Dispositif selon l'une des revendications 6 à 8, **caractérisé en ce qu'**il comprend trois goujons de fixation (14).

10. Véhicule automobile, **caractérisé en ce que** le pare-brise avant (1) de celui-ci est équipé d'au moins un dispositif de fixation d'un mécanisme d'entraînement d'essuie-glace (3) tel que défini dans l'une quelconque des revendications précédentes.

## Claims

1. Device for mounting a windshield-wiper driving mechanism (3) which comprises a casing (4) provided with a cylindrical tube (5) crossing through a bore (1a) of a window (1) and through which a rotating output shaft (5) passes driving a windshield-wiper arm (7) to enable wiping of a surface of the windshield, said device comprises a plate (10) supporting the driving mechanism (3) comprising a bore (10a) through which the cylindrical tube (5) passes, said plate being fixed firstly by gluing to the surface of the window (1) opposite the surface to be wiped and secondly to the casing (4) of this mechanism by at least one joining element (13), **characterized in that** the device also comprises a stirrup-shaped rubber part (16) fixed to the window (1) so that a first(17) of the two branches (17,18) of the part (16) directly covers the area of the window to be wiped that lies in the vicinity of the bore (1a) of the window (1) and the second branch (18) of part (16) is sandwiched between the supporting plate (10) and a bedplate (12) of the casing (4) of driving mechanism (3), the cylindrical tube (5) passing through two orifices (17a, 18a) respectively of the first and second branches (17,18) of the rubber part (16) gripping the tube (15), in order to dampen vibrations propagated by the driving mechanism (3) onto the window (1) and to ensure a seal between the driving mechanism (3) and the bore (1a) of the window.

2. Device as in claim 1, **characterized in that** it also comprises a rubber part (20) forming a cylindrical sealing ring housed in the bore (1a) of the window (1) gripping the cylindrical tube (5).

3. Device as in claim 2, **characterized in that** the sealing ring (20) comprises a collar (20b) inserted between the bedplate (12) of the casing (4) of the driving mechanism (3) and the second branch (18) of the rubber part (16), and another opposite collar (20a) bearing elastically on the first branch (17) of the rubber part (16) to hold the first branch (17) flat against the surface of the window (1) to be wiped.

4. Device as in claim 2, **characterized in that** the sealing ring (20) is made by molding with the second branch (18) of the rubber part (16) extending perpendicular to this branch, and the first branch (17) of the rubber part (16) bears imperviously upon the free end of the sealing ring (20).

5. Device as in any of the preceding claims, **characterized in that** the connecting branch (19) connecting the two branches (17,18) of the rubber part (16) bears upon a lower edge of the window (1).

6. Device as in any of the preceding claims, **characterized in that** the joining element (13) comprises a dowel pin (14) joined to the supporting plate (10) by successively passing through a bore (18b) of the second branch (18) of the rubber part (16), through a bore (12a) of the fixing bedplate (12) of casing (4) of the driving mechanism (3), and a locking nut (15).

7. Device as in any of the preceding claims, **characterized in that** the window (1) is fixed by two parallel strips of glue (25, 26) to two parallel front plates respectively (23, 24) of a supporting structure in the form of a casing (22) and between which the assembly is fixed consisting of the rubber part (16), the supporting plate (10) and the bedplate (12) of the casing (4) of the driving mechanism (3) which is housed in the support structure (22) comprising one or more service traps (27) to access the driving mechanism (3) from the outside.

8. Device as in claim 7 when considered in combination with claim 5, **characterized in that** one (26) of the strips of glue is applied along the lower edge of the window (1) and the stirrup-shaped rubber part (16) is positioned between two separate glue portions of this strip.

9. Device as in any of claims 6 to 8, **characterized in that** it comprises three fixing pins (14).

10. Motor vehicle **characterized in that** its front windshield (1) is equipped with at least one mounting device for a windshield-wiper driving mechanism such as defined in any of the preceding claims.

## Patentansprüche

1. Vorrichtung zur Befestigung eines Mechanismus zum Antreiben eines Scheibenwischers (3), die ein Gehäuse (4) aufweist, mit einem zylindrischen Rohr (5) ausgestattet, welches eine Bohrung (1a) einer Scheibe (1) durchquert und von einer drehenden Ausgangsachse (6) durchquert wird, die einen Scheibenwischerarm (7) zwecks Reinigung einer Oberfläche der Scheibe antreibt, wobei diese Vorrichtung eine Platte (10) aufweist, die den Antriebsmechanismus (3) hält und eine Bohrung (10a) umfasst, welche von dem zylindrischen Rohr (5) durchquert wird und einerseits durch Kleben an der Oberfläche der Scheibe (1) befestigt ist, die der zu trocknenden Scheibe gegenüberliegt, und andererseits am Gehäuse (4) dieses Mechanismus durch mindestens ein Verbindungselement (13), **dadurch gekennzeichnet, dass** sie ebenfalls ein bügelförmiges Gummiteil (16) aufweist, das an der Scheibe (1) derart befestigt ist, dass ein erster Schenkel (17) der beiden Schenkel (17, 18) des Teils (16) direkt den Bereich der Oberfläche der zu trocknenden Scheibe, der sich in der Nähe der Bohrung (1a) der Scheibe (1) befindet, abdeckt, und der zweite Schenkel (18) des Teils (16) entweder zwischen der Halteplatte (10) und einer Unterlage (12) des Gehäuses (4) des Antriebsmechanismus (3) liegt, wobei das zylindrische Rohr (5) zwei Öffnungen (17a, 18a) des jeweiligen ersten und zweiten Schenkels (17, 18) des das Rohr (5) haltenden Gummiteils (16) durchquert, um auf diese Weise die vom Antriebsmechanismus (3) auf die Scheibe (1) übertragenen Schwingungen zu dämpfen und um eine Dichtigkeit zwischen dem Antriebsmechanismus (3) und der Bohrung (1a) der Scheibe zu gewährleisten.

2. Vorrichtung nach Anspruch 1, **dadurch gekennzeichnet, dass** sie weiterhin ein Gummiteil (20) aufweist, das einen zylindrischen Dichtring ausbildet, der in der Bohrung (1a) der Scheibe (1) gelagert ist, indem er das zylindrische Rohr (5) umschließt.

3. Vorrichtung nach Anspruch 2, **dadurch gekennzeichnet, dass** der Dichtring (20) einen Flansch (20b) aufweist, der sich zwischen der Unterlage (12) des Gehäuses des Antriebsmechanismus (3) und dem zweiten Schenkel (18) des Gummiteils befindet, und einen gegenüberliegenden zweiten Flansch (20a), der sich elastisch auf den ersten Schenkel (17) des Gummiteils (16) stützt, um den ersten Schenkel (17) an die zu trocknende Oberfläche der Scheibe (1) anzudrücken.

4. Vorrichtung nach Anspruch 2, **dadurch gekennzeichnet, dass** der Dichtring (20) durch Formen mit dem zweiten Schenkel (18) des Gummiteils (16) hergestellt wird, indem er sich im rechten Winkel senkrecht zu diesem Schenkel erstreckt und dass sich der erste Schenkel (17) des Gummiteils (16) dichtend auf dem freien Ende des Dichtrings (20) abstützt.

5. Vorrichtung nach einem der vorhergehenden Ansprüche, **dadurch gekennzeichnet, dass** sich der Verbindungsschenkel (19) der beiden Schenkel (17, 18) des Gummiteils (16) auf dem unteren Rand der Scheibe (1) abstützt.

6. Vorrichtung nach einem der vorhergehenden Ansprüche, **dadurch gekennzeichnet, dass** das Verbindungselement (13) einen Stift (14) aufweist, der mit der Halteplatte (10) verbundenen ist, indem er sukzessiv eine Bohrung (18b) des zweiten Schenkels (18) des Gummiteils (16) und eine Bohrung (12a) der Unterlage (12) zur Befestigung des Gehäuses (4) des Antriebsmechanismus (3) durchquert, und eine Feststellmutter (15).

7. Vorrichtung nach einem der vorhergehenden Ansprüche, **dadurch gekennzeichnet, dass** die Scheibe (1) mit zwei parallelen Klebestreifen (25, 26) an jeweils zwei parallelen Frontplatten (23, 24) einer Trägerstruktur in Form eines Gehäuses (22) befestigt ist, zwischen denen die Baugruppe befestigt ist, die von dem Gummiteil (16), der Halteplatte (10) und der Unterlage (12) des Gehäuses (4) des Antriebsmechanismus (3) gebildet wird, der in der Trägerstruktur (22) untergebracht ist, die eine oder mehrere Zugangsklappen (27) für den Zugang von außen zum Antriebsmechanismus (3) umfasst.

8. Vorrichtung nach Anspruch 7, der, wenn in Verbindung mit Anspruch 5 betrachtet, **dadurch gekennzeichnet ist, dass** ein Streifen (26) der Klebestreifen am unteren Rand der Scheibe (1) entlang angebracht wird und sich das bügelförmige Gummiteil (16) zwischen den beiden getrennten Klebeabschnitten dieses Streifens befindet.

9. Vorrichtung nach einem der Ansprüche 6 bis 8, **dadurch gekennzeichnet, dass** sie drei Befestigungsstifte (14) aufweist.

10. Kraftfahrzeug, **dadurch gekennzeichnet, dass** dessen Windschutzscheibe (1) mit mindestens einer Vorrichtung zur Befestigung eines Mechanismus zum Antreiben eines Scheibenwischers (3), so wie in einem beliebigen der obigen Ansprüche definiert, ausgestattet ist.
